# EUROPEAN PATENT APPLICATION

(11) **EP 1 797 943 A1**
(43) Date of publication of application: **20.06.2007**
(21) Application number: 05257674.1
(22) Date of filing: 14.12.2005
(51) Int. Cl.: B01D 53/50, B01D 53/74, B01D 53/75, B01D 53/79, B01D 53/18

(54) **Scrubbing system**

(71) Applicant: Atkins Limited, Woodcote Grove, Ashley Road Epsom, Surrey KT18 5BW (GB)
(72) Inventor: Young, John David, Scotland FK1 5QG (GB); Gilham, Steven, Dr., Surrey, KT17 1NA (GB); Woodburn, Peter John, Dr., London SW18 5UQ (GB)
(74) Representative: Findlay, Alice Rosemary

(57) **Abstract**

A combustion engine exhaust scrubbing system for the removal of sulphur dioxide from an exhaust gas comprises two scrubbing devices in series, each of which uses seawater as a scrubbing fluid, one of the devices being a quenching device comprising a first seawater source for introducing seawater into an exhaust gas flow and a conduit through which the gas flows, the conduit having a constriction downstream of the seawater source, contact of the gas with the seawater occurring during the quenching stage causing absorption of sulphur dioxide from the gas by the seawater.

A method of scrubbing a combustion engine exhaust gas is also provided.

## Description

The invention relates to a system for scrubbing exhaust gases, and particularly to a system for the removal of sulphur dioxide from exhaust gases emitted by a combustion engine, especially one in a marine vessel.

The various hydrocarbon fuels commonly used today contain varying amounts of impurities and, in particular, sulphur compounds. Following combustion, sulphur dioxide (SO₂) forms a part of the exhaust gas in concentrations proportional to the original sulphur content of the fuel. Once released in this way the sulphur dioxide may be absorbed by water in the atmosphere and contribute to acid rain. There is increasing pressure to reduce sulphur dioxide emissions resulting from combustion of hydrocarbon fuels as much as possible. Current regulations set maximum emission levels, and these levels are expected to be lowered in the future.

Land based power stations have used for some time methods of reducing SO₂ levels from exhaust gases. One example of a known method uses a variety of chemicals. It is also known to use seawater, typically in the form of mists or sprays, as a scrubbing medium in power stations. This method brings the gas into contact with small liquid droplets of high surface area, promoting absorption of sulphur dioxide. Such processes involve the concomitant use of chemical buffers and/or acid neutralisers to return the pH of the used seawater to a safe level.

It is also known to generate bubbles of the gas to be scrubbed within a liquid bath to provide a path for gas to liquid absorption. This is usually achieved by forcing the gas through a plurality of holes in a plate and through a pool of water sitting above the plate.

Reciprocating combustion engines, and in particular those using a two or four stroke diesel cycle are commonly used as the main source of motive and auxiliary power for ships. Ships often use relatively low quality fuel having a high level of SO₂. It is therefore important to be able to remove SO₂ from exhaust gases emitted from ships, so that current and future legislation on emission levels can be met.

However, it has been found that known methods of scrubbing exhaust gases from power stations are not suitable for use with combustion engines. Scrubbing the exhaust gases using a pool of water through which the gas passes cannot be used with combustion engines since the depth of water that would be needed to absorb a sufficient percentage of the SO₂ would cause a significant back-pressure. The magnitude of the back-pressure would damage the turbo-charger from which the exhaust gas is emitted.

The known methods also use significant amounts of chemicals. This makes the methods particularly inconvenient for use in marine vessels since space is limited and capacity to carry stocks of additional chemicals such as buffers or acid neutralisers is not available

An additional problem faced with scrubbing methods for use in marine vessels is that the methods must be relatively fast. A ship cannot use a scrubbing apparatus which has a long residence time (i.e. length of time to scrub exhaust gas), since ships cannot accommodate the large equipment size and weight which is involved.

It is desirable to remove a significant percentage of SO₂ from exhaust gases from marine vessels, for example 90% or more preferably 95%. The known methods cannot efficiently remove such high levels of the impurity since large equipment is needed and large pressure drops arise, or significant quantities of chemicals are required, resulting in the corresponding disadvantages mentioned above.

The present invention has been made with these points in mind.

According to a first aspect of the present invention, a combustion engine exhaust scrubbing system for the removal of sulphur dioxide from an exhaust gas, comprises two scrubbing devices in series, each of which uses seawater as a scrubbing fluid, one of the devices being a quenching device comprising a first seawater source for introducing seawater into an exhaust gas flow and a conduit through which the gas flows, the conduit having a constriction downstream of the seawater source, contact of the gas with the seawater occurring during the quenching stage causing absorption of sulphur dioxide from the gas by the seawater.

According to a second aspect of the invention, a method of scrubbing a combustion engine exhaust gas to remove sulphur dioxide therefrom comprises introducing an exhaust gas flow into a scrubbing system, passing the gas through first and second scrubbing devices which are arranged in series and use seawater as a scrubbing fluid, one of the scrubbing devices being a quenching device in which seawater is introduced into the gas flow, the gas and seawater then passing though a constriction, the gas contacting the seawater causing absorption of sulphur dioxide from the gas by the seawater.

The invention provides a scrubbing system which can be used with combustion engines and which is particularly advantageous with combustion engines on marine vessels. The invention uses only seawater, which is readily accessible from marine vessels in quantities as large as are needed. Since no chemicals are involved, no storage space is needed on the vessel. Further, the specific use of a quenching device combined with another scrubbing device means that the removal of sulphur dioxide occurs over at least two different scrubbing devices. This increases the total amount of sulphur dioxide absorbed.

The constriction reduces the cross-sectional area of the gas/seawater flow, causing the gas and seawater to flow faster through that region and promoting mixing of the gas and seawater.

The diameter of the conduit downstream of the constriction is advantageously greater than the diameter of the constriction. This results in expansion of the exhaust gas, which cools the gas. This cooling effect adds to the cooling caused by the seawater.

In a preferred embodiment, the other of the scrubbing devices is a bubbling device comprising a diffuser and means for supplying seawater adjacent a downstream surface of the diffuser, the diffuser being adapted to transmit the gas through the diffuser surface into the seawater so that further contact of the gas with seawater occurs. The diffuser may be a plate having a plurality of openings extending through the plate, the plate being arranged generally perpendicularly to the direction of flow of the gas.

The combined use of a quenching device and a bubbling device is especially advantageous. The use of the quenching device to remove a proportion of the sulphur dioxide allows a smaller volume of water above the diffuser to be used, avoiding a back pressure too large for the turbo charger in the combustion engine. Thus, a scrubbing process which is not normally suitable for use with combustion engines can be used with surprising efficiency if combined with a quenching stage.

In one embodiment, the seawater is a stream of seawater moving over the diffuser surface. It is preferred that the seawater is directed transversely to the direction of flow of the gas. In a particularly preferred embodiment, the seawater is jetted over the diffuser surface.

By jetting the steam of liquid over the surface, the liquid is provided with the energy needed to effectively mix with the gas, while keeping flow energy losses to a minimum. The gas flow breaks up the flow of jetted seawater and hence creates substantial turbulence, ensuring a high degree of mixing of the gas with the seawater. This generates a large number of bubbles which provide a very large surface area of seawater for contact with the gas, thus absorbing a much higher level of sulphur dioxide compared with bubbling devices in which the water is not jetted over the surface.

The bubbling device may include a second seawater source for directing the seawater over the diffuser. Preferably, the seawater source may direct seawater radially outwardly therefrom.

Preferably, the quenching device is upstream of the bubbling device.

The invention may comprise a third scrubbing device. This third scrubbing device may comprise a porous packing, wetted by seawater, through which the exhaust gas flows such that contact of the gas with the seawater occurs and causes absorption of sulphur dioxide from the gas by the seawater. The packing may be wetted by a third seawater source which may be arranged downstream of the packing, the seawater penetrating into the packing. The third scrubbing device may be a polisher. It may be located downstream of said two scrubbing devices.

The seawater sources may each be a nozzle or a plurality of nozzles, or other suitable spraying devices.

Preferably, the quenching device absorbs about 50% of the sulphur dioxide present in the exhaust gas. When combined with a bubbling device, the two devices together preferably absorb about 90% of the sulphur dioxide. The use of a polisher provides for further absorption of sulphur dioxide and can bring the total absorption of the system to about 95%.

It can be useful to provide a heat exchanger for transferring heat from hot exhaust gas entering the scrubbing system to exhaust gas leaving the system.

In this way, not only is the exhaust gas entering the system cooled, but the exhaust gas leaving the system is provided with the additional energy needed to lift the exhaust gas clear of the exhaust stack (e.g. chimney).

A de-mister is typically provided downstream of the scrubbing devices to prevent the emission of seawater with the exhaust gas into the atmosphere. This ensures that seawater having an increased pH is not emitted into the atmosphere.

Two or more of each kind of scrubbing device may be provided. For example, there may be two or more quenching devices in series or in parallel, and/or two or more bubbling devices in series or in parallel, and/or 2 or more polishers in series or in parallel.

The invention will now be described, by way of example only, with reference to the accompanying drawings in which:
Figure 1 is a section through a scrubber of the present invention;

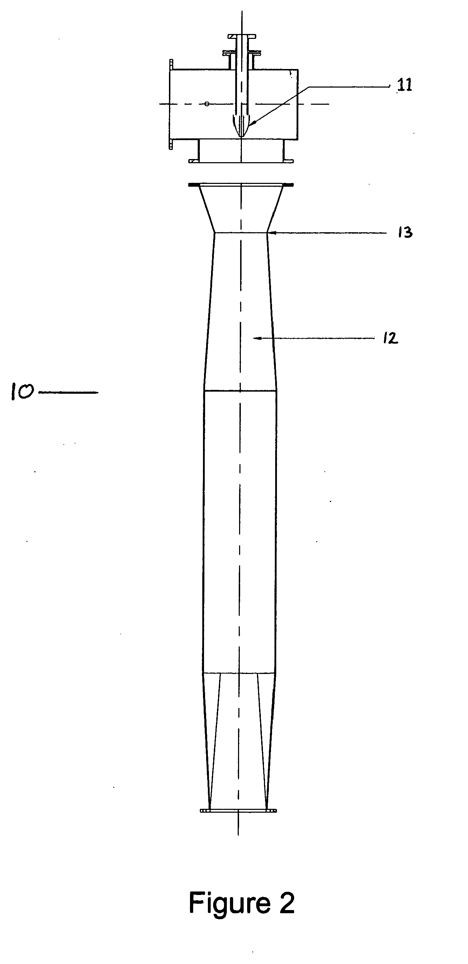

Figure 2 is a section through the quenching device shown in Figure 1;
Figure 3 is an exploded perspective view of the bubbling device shown in Figure 1;
Figure 4 is a section through the bubbling device of in Figure 3.

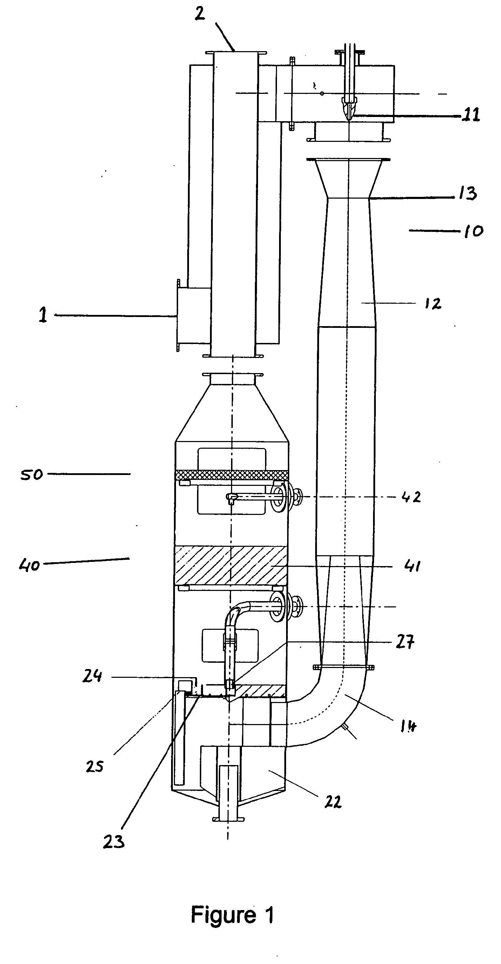

The scrubbing system shown in Figure 1 has an exhaust gas inlet 1 and outlet 2, and three scrubbing devices arranged in series between the inlet and outlet. The inlet 1 passes exhaust gas to a quenching device 10, which passes gas to a bubbling device 20, which in turn passes gas to a polishing device 40. A de-mister 50 is arranged down-stream of the polishing device 40, followed by the outlet 2.

The quenching stage includes a nozzle 11 arranged to spray seawater into a conduit 12. From its mouth, the width of the conduit decreases in diameter, tapering to a narrow waist, which constitutes a constriction 13. From the constriction 13, the conduit tapers outwardly, thus increasing the diameter of the conduit 12. The rate of decrease in diameter from the mouth to the constriction 13 is greater than the rate of increase in diameter downstream of the constriction. The increase in the diameter of the conduit allows maximum pressure recovery, and the length of the conduit determines the residence time for the mixing process

The quenching device 10 is connected in series to a bubbling device 20. The outlet 14 of the quenching device opens into a sump 22 which collects used seawater from the quenching device 10. The bubbling device 20 comprises a diffuser 23 in the form of a plate located in a sump 22 just below the upper end of the sump 22 so that the walls of the sump and the plate co-operate to form a recess 24. Three downcommers 25, which are sections of pipe, are attached to the sump wall to form a flow path between the top of the plate and the sump. The downcommers 25 protrude above the plate 23 and carry seawater from the top of the plate to the sump. A gas inlet 21 (outlet of the quenching device) feeds gas into the bubbling device 20, beneath the plate 23.

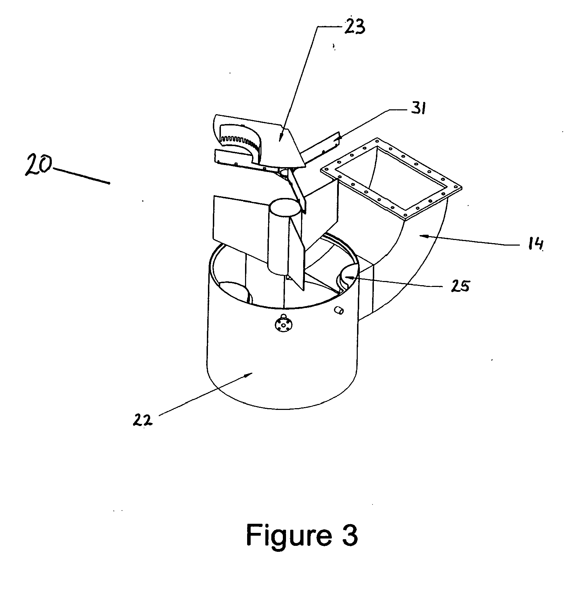

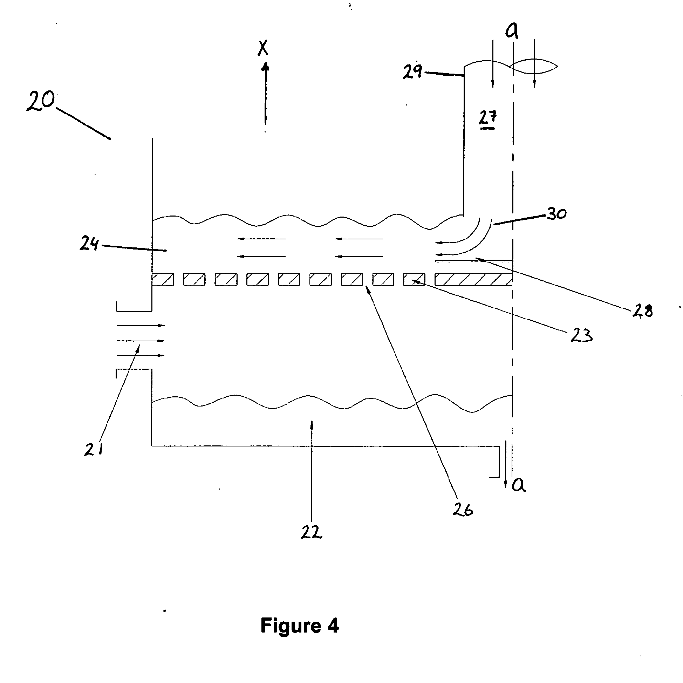

The bubbling device 20 can be seen in more detail in Figures 3 and 4. Figure 4 shows only one half of the bubbling device, the other half being a mirror image along line a-a, except for the inlet 21. The plate 23 has a plurality of openings 26, or holes, there-through to allow the exhaust gas to pass through the plate. The holes 26 are designed so as to form a smooth orifice to minimise drag effects and hence pressure losses.

A seawater 27 inlet is provided to direct seawater in the form of a jet 28 over a surface of the plate 23 to form a stream of jetted seawater. The inlet 27 has a pipe 29 which terminates in a nozzle 30 above the surface of the plate such that its opening is close to the surface. The pipe 29 runs in the direction of gas flow, so the seawater turns through a right angle as it leaves the inlet 27 and is jetted over the plate surface.

The seawater is jetted radially outwardly from the inlet 27 such that it flows generally transversely to the direction of flow of exhaust gas. The direction of flow of gas refers to the general movement of the gas through the device and is in the direction 'x' shown in Figure 1.

The relationship between the shape, size and distribution of the holes 26 in the plate 23, and the volumetric flow rate of seawater sprayed from the inlet 27 is such that a continuous layer of water to a specific depth would be formed in the recess in the absence of the exhaust gas flow. This arrangement is balanced with the flow rate of the gas through the plate 23, in use, to prevent the flow of seawater down through the holes 26, whilst maintaining a sufficient volume of seawater above the plate to prevent large volumes of gas flowing freely through the water without adequately mixing with the water.

For a gas flow of 6000m³ per hour, the plate can have a diameter of 1 m and about 15% can be open, by way of holes. The holes can have a diameter of 5mm and can be arranged on a 12 mm centre triangular pitch. The inlets to the holes, in this embodiment, have a 45° chamfer. This arrangement results in a pressure drop across the plate which maximises the gas throughput whilst satisfying other design constraints, such as the avoidance of plate weeping.

The bubbling device 20 therefore provides a seawater flow rate which is sufficiently high as to cause a great deal of turbulent mixing between the gas and the water such that a bubble domain forms above the plate 23, ensuring that a significant surface area of seawater is available for contact with the exhaust gas.

In this embodiment, though not essential, partition walls 31 are provided adjacent the plate 23 to improve distribution and prevent sloshing of the liquid over the plate. The partition walls extend perpendicularly to, and radially along the plate 23.

Downstream of the bubbling device 20 is the polisher 40. The polisher 40 includes a packing 41 comprising, for example, random metallic packing, which is wetted by seawater dispensed from a further spray 42. Other suitable materials for the packing are known to those skilled in the art. The polisher can be a conventional polisher known in the art.

Between the polisher 40 and the exhaust gas outlet 2 is a de-mister 50 of conventional construction, such as a knitted Mesh De-Mister, available from Knitwire Europe Ltd. The de-mister 50 removes seawater from the exhaust, thus preventing release into the atmosphere of seawater containing impurities.

The exhaust gas inlet 1 and outlet 2 form a heat exchanger to transfer heat from the hot gas entering the scrubbing system to the cooler gas leaving the scrubbing system. The outlet is a conduit running through a larger conduit which acts as the inlet to the scrubbing system.

In use, hot exhaust gas from a combustion engine enters the scrubbing system through the inlet 1. As the gas passes into the quenching device 10, it is mixed with a spray of seawater. The seawater may be from the sea and may therefore be cold, or it may be from the engine cooling system and so may be already warm. In any case, the seawater is cooler than the hot exhaust gas and thus cools the gas down.

The mixture is caused to accelerate towards the constriction 13 due to the decreasing diameter of the conduit towards the constriction.

Mixing of the gas and seawater during this stage results in contact of the gas with the seawater, and thus absorption of sulphur dioxide from the gas by the water.

The exhaust gas passes from the quenching device 10 to the bubbling device 20, pressurising the space in the sump 22 below the plate 23. The pressure below the plate 23 forces the gas through the holes 26 in the diffuser plate and into the body of transversely flowing seawater in the recess 24. The turbulence caused by the gas encountering the water results in the gas and seawater mixing and forming bubbles above the plate surface. These bubbles provide a very large surface area for the gas to contact the seawater, resulting in excellent absorption of sulphur dioxide into the water.

Heat and momentum from the gas are also absorbed during the various scrubbing stages.

When gas is released from the bubble domain, it passes into and through the wetted packing 41 of the polisher 40 where it encounters more seawater and therefore additional sulphur dioxide is absorbed.

After the polisher 40, the gas passes through the de-mister 50 and into the exhaust gas outlet 2. Seawater is blocked from passing into the outlet 2 by the de-mister 50.

Exhaust gas in the outlet 2 is heated by the hot exhaust gas entering the scrubbing system through the inlet 1, thus preventing condensation forming in the exhaust and minimising the formation of an exhaust plume.

About 50% of the sulphur dioxide is absorbed in the quenching device 10; after the bubbling device 20 about 90% has been absorbed; and after the polisher 40 about 95% has been absorbed by the scrubbing system.

The scrubbing devices, particularly the quenching and bubbling devices, also act to remove particulate material from the exhaust gas, since the particulates become entrailed in the seawater.

Variations of the specific example described above can be contemplated, such as by providing two quenching devices in series or in parallel in the gas stream, and/or two bubbling devices may be provided in series or in parallel in the gas stream. More than one scrubbing system may be combined, to increase scrubbing capacity.

The overall geometry of the devices may be of any section, such as circular, rectangular or others, as best suits the layout of the space available and the flow behaviour of the liquid stream. Materials of construction which are suitable for use with the gases and liquids involved in the process are known to the skilled artisan.

## Claims

1. A combustion engine exhaust scrubbing system for the removal of sulphur dioxide from an exhaust gas, comprising two scrubbing devices in series, each of which uses seawater as a scrubbing fluid, one of the devices being a quenching device comprising a first seawater source for introducing seawater into an exhaust gas flow and a conduit through which the gas flows, the conduit having a constriction downstream of the seawater source, contact of the gas with the seawater occurring during the quenching stage causing absorption of sulphur dioxide from the gas by the seawater.

2. The system of claim 1, wherein the diameter of the conduit downstream of the constriction is greater than the diameter of the constriction.

3. The system of claim 1 or claim 2, wherein the other of the scrubbing devices is a bubbling device comprising a diffuser and means for supplying seawater adjacent a downstream surface of the diffuser, the diffuser being adapted to transmit the gas through the diffuser surface into the seawater so that further contact of the gas with seawater occurs.

4. The system of claim 3, wherein the diffuser is a plate having a plurality of openings extending through the plate, the plate being arranged generally perpendicularly to the direction of flow of the gas.

5. The system of claim 3 or claim 4, wherein the means for supplying seawater directs a stream of seawater over the diffuser surface.

6. The system of claim 5, wherein the stream of seawater is directed generally transversely to the direction of flow of the gas.

7. The system of claim 5 or claim 6, wherein the means for directing the stream of seawater jets the stream of seawater over the surface.

8. The system of any one of claims 3 to 7, wherein the means comprises at least one second seawater source.

9. The system of claim 8, wherein the seawater source sprays seawater radially outwardly therefrom.

10. The system of any one of claims 3 to 9, wherein the quenching device is upstream of the bubbling device.

11. The system of any one of the preceding claims, further having a third scrubbing device comprising a porous packing wetted by seawater through which the exhaust gas flows such that contact of the gas with the seawater occurs and causes absorption of sulphur dioxide from the gas by the seawater.

12. The system of claim 11, wherein the packing is wetted by a third seawater source which dispenses seawater, the seawater penetrating into the packing.

13. The system of claim 11 or claim 12, wherein the third scrubbing device is a polishing device and is located downstream of said two scrubbing devices.

14. The system of any one of the preceding claims, further comprising a heat exchanger for transferring heat from hot exhaust gas entering the scrubbing system to exhaust gas leaving the scrubbing system.

15. The system of any one of the preceding claims, further comprising a de-mister downstream of the scrubbing devices to prevent the emission of seawater with the exhaust gas into the atmosphere.

16. The system of any one of the preceding claims, wherein at least one of the scrubbing devices has at least one other scrubbing device provided in parallel therewith.

17. A method of scrubbing a combustion engine exhaust gas to remove sulphur dioxide therefrom, comprising introducing an exhaust gas flow into a scrubbing system, passing the gas through first and second scrubbing devices which are arranged in series and use seawater as a scrubbing fluid, one of the scrubbing devices being a quenching device in which seawater is introduced into the gas flow, the gas and seawater then passing though a constriction, the gas contacting the seawater causing absorption of sulphur dioxide from the gas by the seawater.

18. The method of claim 17, wherein the quenching device includes a conduit through which the gas is passed, part of which forms the constriction, the diameter of the constriction being less that the diameter of the conduit downstream of the constriction so that expansion of the gas and seawater mixture takes place downstream of the constriction.

19. The method of claim 17 or claim 18, wherein the other of the scrubbing devices is a bubbling device comprising a diffuser and means for supplying seawater adjacent a downstream surface of the diffuser, the method including transmitting the gas through the diffuser surface into the seawater so that further contact of the gas with seawater occurs.

20. The method of claim 19, wherein the diffuser is a plate having a plurality of openings extending through the plate, the plate being arranged generally perpendicularly to the direction of flow of the gas.

21. The method of claim 19 or 20, wherein the means for supplying seawater directs a stream of seawater over the diffuser surface.

22. The method of claim 21, wherein the stream of seawater is directed generally transversely to the direction of flow of the gas.

23. The method of claim 21 or claim 22, wherein the stream of seawater is jetted over the diffuser surface.

24. The method of any one of claims 21 to 23, wherein the seawater is directed radially outwardly from a seawater source.

25. The method of any one of claims 17 to 24, wherein the quenching device is upstream of the bubbling device.

26. The method of any one of claims 17 to 25, further comprising passing the gas through a third scrubbing device comprising a porous packing wetted by seawater through which the exhaust gas flows such that contact of the gas with the seawater occurs and causes absorption of sulphur dioxide from the gas by the seawater.

27. The method of claim 26, wherein the third scrubbing device is a polishing device and is located downstream of said two scrubbing devices.

28. The method of any one of claims 17 to 27, further comprising transferring heat from hot exhaust gas entering the scrubbing system to exhaust gas leaving the scrubbing system.

29. The method of any one of claims 17 to 28, further comprising demisting the gas and seawater mixture to separate the seawater from the exhaust gas to prevent emission of seawater into the atmosphere.

30. The method of any one of claims 17 to 29, wherein at least one of the scrubbing devices has at least one other scrubbing device provided in parallel therewith.
